# EUROPEAN PATENT APPLICATION

(11) **EP 4 572 415 A1**
(43) Date of publication of application: **18.06.2025**
(21) Application number: 22955062.9
(22) Date of filing: 29.09.2022
(51) Int. Cl.: H04W 52/02, H04W 52/30, H04W 52/42, H04W 88/08

(54) **GROUPING OF PLURALITY OF COMMUNICATORS FOR POWER SAVING MODE**

(30) Priority: 10.08.2022 JP 2022128396
(71) Applicant: Rakuten Mobile, Inc., Tokyo 158-0094 (JP)
(72) Inventor: MUHAMMAD Awn, Tokyo 158-0094 (JP); KITAGAWA Koichiro, Tokyo 158-0094 (JP)
(74) Representative: Betten & Resch
(86) International application number: PCT/JP2022/036566
(87) International publication number: WO 2024/034148

(57) **Abstract**

A communication control apparatus includes at least one processor that performs: by an energy saving ID setting unit, setting a common energy saving ID for a plurality of communication devices to which a common energy saving mode should be applied; by an energy saving mode designation unit, designating a common energy saving mode to be applied to a plurality of communication devices; by a scrambling unit, applying scrambling based on the energy saving ID to the control information including the energy saving mode designation information; by an energy saving information sharing unit, sharing at least one of the energy saving ID and the energy saving mode designation information, by having the plurality of communication devices descramble the control information.

## Description

### BACKGROUND OF THE INVENTION

### 1. Field of the Invention

The present disclosure relates to grouping of a plurality of communication devices for energy saving mode.

### 2. Description of the Related Art

The number, types, and applications of wireless communication devices or portable communication devices (hereinafter collectively referred to as communication devices), represented by smartphones or Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Patent Literature 1: JP-A-2010-278886

### SUMMARY OF THE INVENTION

As the number of communication devices or the communication volume per communication device increases, energy consumption on the network side also increases. A lot of energy saving methods have been devised for each communication device or each base station (or each communication cell). However, these conventional methods are not sufficient, and further methods are wanted to reduce energy consumption on the network side.

The present disclosure was made in view of the circumstances, and the purpose is to provide a communication control apparatus and the like that can effectively reduce energy consumption on the network side.

In order to solve the above issue, a communication control apparatus in a certain aspect of the present disclosure includes at least one processor that performs: by an energy saving mode designation unit, designating a common energy saving mode to be applied to a plurality of communication devices.

According to the aspect, by designating a common energy saving mode for a plurality of communication devices, effective energy saving control can be performed based on group of communication devices.

Another aspect of the present disclosure is a communication control method. The method includes: setting a common energy saving ID for a plurality of communication devices to which a common energy saving mode should be applied; designating the common energy saving mode to be applied to the plurality of communication devices; and sharing at least one of the energy saving ID and the energy saving mode designation information with the plurality of communication devices.

Further another aspect of the present disclosure is a computer-readable medium. The computer-readable medium stores a communication control program causing a computer to perform: setting a common energy saving ID for a plurality of communication devices to which a common energy saving mode should be applied; designating the common energy saving mode to be applied to the plurality of communication devices; and sharing at least one of the energy saving ID and the energy saving mode designation information with the plurality of communication devices.

In addition, any combination of the above components, and any conversion of the expression of the present disclosure among methods, devices, systems, recording media, computer programs and the like are also encompassed within the disclosure.

According to the present disclosure, energy consumption on the network side can be effectively reduced.

### BRIEF DESCRIPTION OF THE DRAWINGS

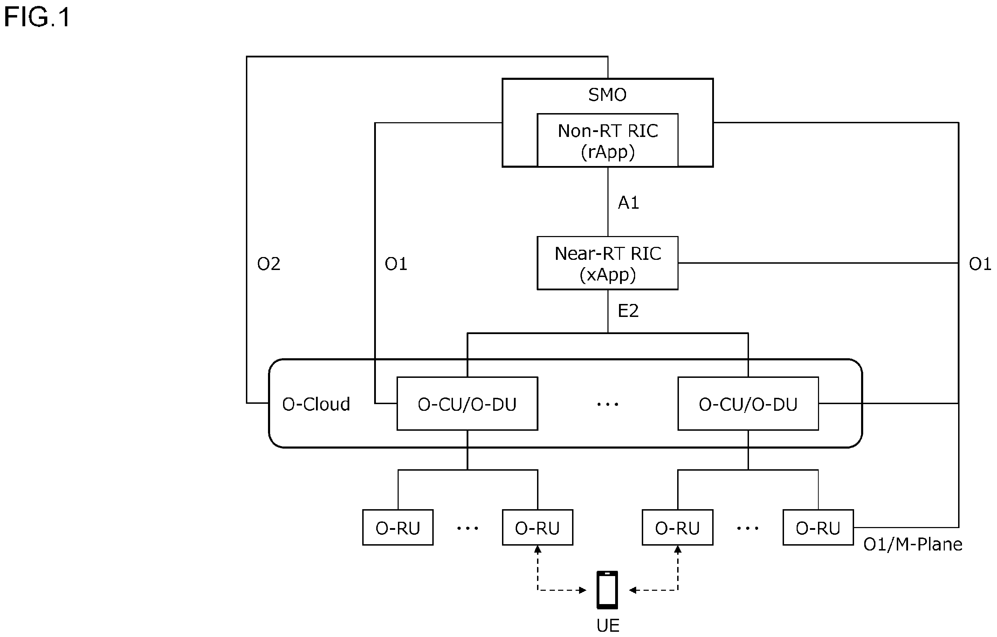

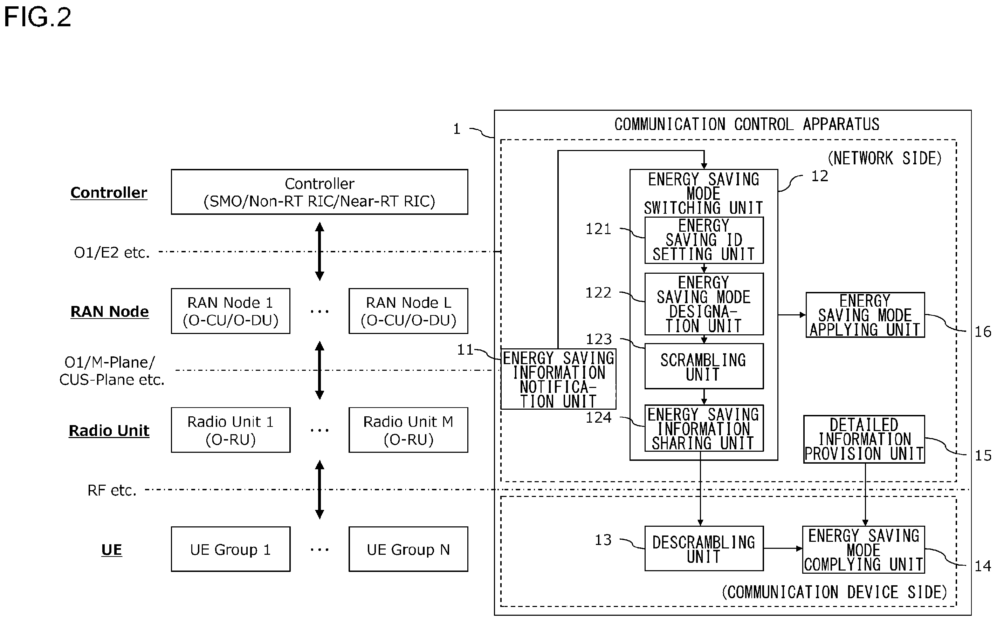

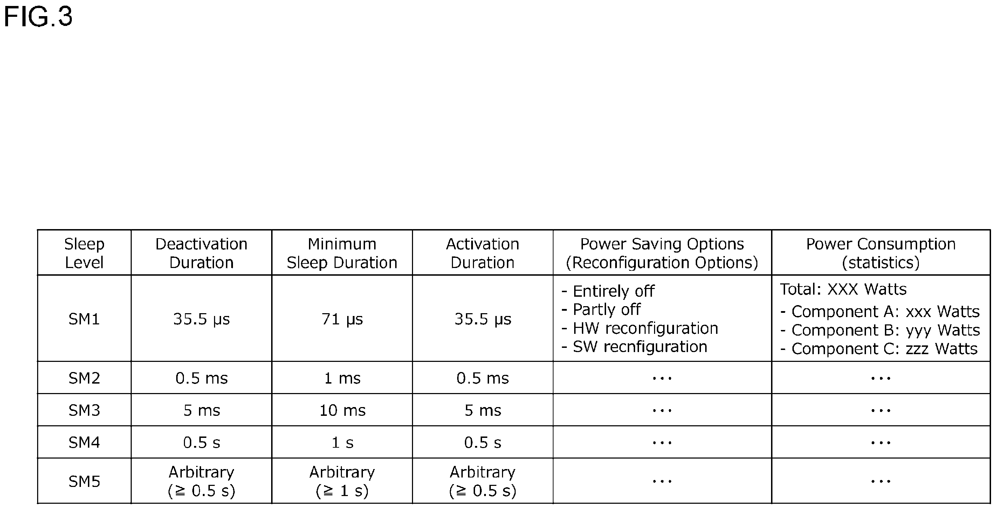

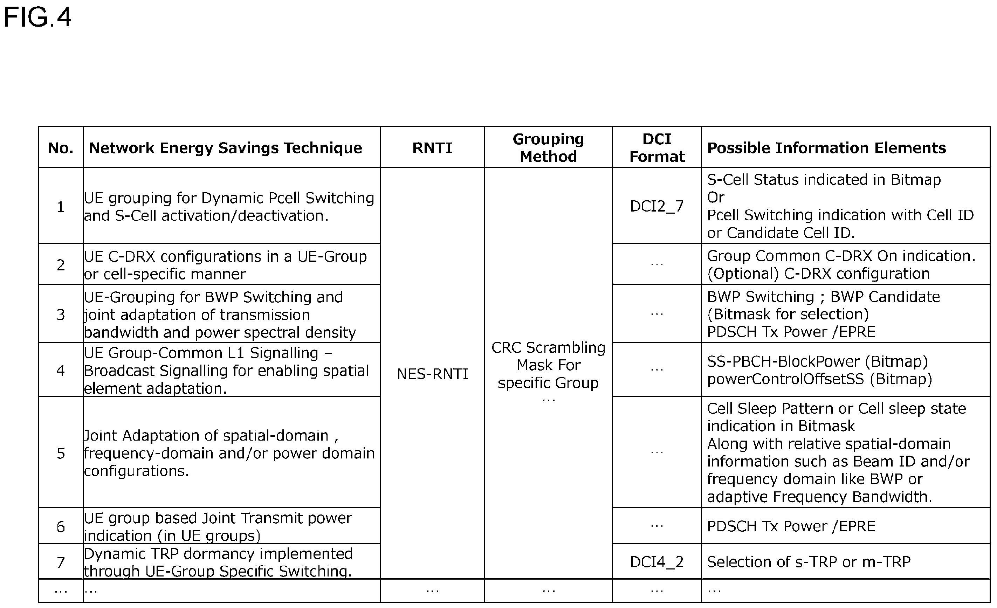

Figure 1 schematically shows the overview of the communication control apparatus. Figure 2 is the schematic functional block diagram of the communication control apparatus. Figure 3 shows a specific example of the energy saving mode of the O-RU included in the energy saving information notified by the energy saving information notification unit. Figure 4 shows examples of NES-RNTI and DCI utilized for NES control.

### DETAILED DESCRIPTION OF THE INVENTION

The communication control apparatus according to the present disclosure can be utilized for energy saving control in any mobile communication networks for communication devices such as mobile or portable communication devices (e.g., smartphones and cellular phones). For example, 4G mobile communication networks (hereinafter also referred to as 4G networks) or 5G mobile communication networks (hereinafter also referred to as 5G networks) that are already commercialized, as well as mobile communication networks such as 6G that would be commercialized in the future, are assumed to be applicable to the communication control apparatus according to the present disclosure. In these mobile communication networks (hereinafter also referred to as networks for simplicity), terrestrial base stations installed on the ground or flying non-terrestrial base stations such as communication satellites and aircrafts provide communication cells to communication devices.

The energy saving control on the network side described in the present embodiment mainly aims to reduce energy consumption in base stations such as terrestrial base stations and non-terrestrial base stations. However, the energy saving control method according to the present embodiment can also reduce the energy consumption of communication devices communicating with the network, as well as the energy consumption of any equipment on the network side, for example, a distributed unit (DU) or a central unit (CU) that can constitute a radio access network (RAN) as part of a base station, a relay station, an intermediate station, a gateway and the like that can constitute a RAN together with a base station, and various information and communication equipment that constitutes a core network (CN).

Concerning the RAN including base stations, for the purpose of the so-called open radio access network (RAN) in a mobile communication system, "Open RAN", "O-RAN", "vRAN" and the like are being considered. In the specification, "O-RAN" is used as a comprehensive term for such various "open radio access networks". Therefore, the interpretation of "O-RAN" in the specification is not limited to the standard and/or the specification of the same name "O-RAN" specified by the O-RAN Alliance.

A radio unit (RU) in the O-RAN is called an O-RU and provides a communication cell to a communication device (UE: User Equipment). The O-RUs are controlled by RAN nodes, which are composed of the O-CUs, which are central units (CUs), and/or the O-DUs, which are distributed units (DUs). Furthermore, RAN nodes are controlled by the Near-RT RIC (Near-Real Time RAN Intelligent Controller) and/or the Non-RT RIC (Non-Real Time RAN Intelligent Controller) and the like, which are higher-level controllers. The O-RAN also provides a virtual infrastructure, also called O-Cloud, that virtually manages a set of a plurality of RAN nodes.

In the present embodiment, energy saving control for the O-RAN is described exemplarily. The main energy saving control target in the O-RAN are an O-RU corresponding to a radio unit in a base station, an O-DU corresponding to a distributed unit in a base station, and an O-CU corresponding to a central unit in a base station. As mentioned above, the application of the present disclosure is not limited to the O-RAN. For example, when applying the present disclosure to general mobile communication networks other than the O-RAN (e.g., 5G networks), the following descriptions for O-RU/O-DU/O-CU in the O-RAN can be applied to radio unit/distributed unit/central unit respectively in a terrestrial base station or a non-terrestrial base station.

In the following, the present embodiment is described in accordance with the "O-RAN" which is the standard and/or the specification developed by the O-RAN Alliance. Therefore, the known terms defined in "O-RAN" will be used in the present embodiment just for convenience, but the technologies according to the disclosure can be applied to other existing radio access networks such as "Open RAN" and "vRAN" and/or to similar radio access networks that may be developed in the future. Besides, the O-RAN in the present embodiment shall be mainly a 5G RAN compliant to 5G. For this reason, the known terminology specified in 5G is used in the present embodiment for convenience, but the technology according to the present disclosure can be applied to other existing mobile communication networks such as 4G or other mobile communication networks that may be developed in the future such as 6G. In networks other than O-RAN or 5G, similar technological components might be given different terms from O-RAN or 5G. However, this does not preclude the application of the present disclosure, regardless of the difference in terminology, as long as at least a portion of the technical configurations, operations, and effects are similar.

Figure 1 shows a schematic overview of the communication control apparatus according to the present embodiment. The communication control apparatus is a RAN control apparatus that controls radio access network in accordance with the O-RAN. The SMO (Service Management and Orchestration) controls the entire RAN control apparatus or the entire O-RAN and coordinates the operations of each portion. The SMO is equipped with a Non-RT RIC (Non-Real Time RAN Intelligent Controller) that functions as the overall control processor responsible for overall control. The Non-RT RIC, which has a relatively long control cycle (for example 1 second or longer), issues policies, policies, guidance and the like concerning the operation of each RAN node (O-CU and/or O-DU as described below). Specifically, the Non-RT RIC executes application software called rApp to issue operational policy for each RAN node to the Near-RT RIC (Near-Real Time RAN Intelligent Controller) through the A1 interface. The Near-RT RIC, which has a relatively short control cycle (for example shorter than 1 second), executes application software called xApp to control each RAN node (O-CU/O-DU) itself and/or general-purpose hardware and the like in the radio unit (O-RU) connected to each of the RAN nodes through the E2 interface.

The illustrated RAN node has an O-CU, which is an O-RAN compliant central unit (CU), and/or O-DU, which is an O-RAN compliant distributed unit (DU). Both of the O-CU and the O-DU are responsible for baseband processing in the O-RAN, where the O-CU is provided on the side of the core network (not shown in the figure), and the O-DU is provided on the side of the O-RU, which is an O-RAN compliant radio unit (RU). The O-CU may be divided into the O-CU-CP, which constitutes the control plane (CP), and the O-CU-UP, which constitutes the user plane (UP). The O-CU and the O-DU may be integrally configured as a single baseband processing unit. The O-eNB as a base station compliant with the O-RAN and the 4th generation mobile communication system (4G), may be provided as a RAN node. One or more O-RUs are connected to each RAN node (O-CU/O-DU) and are controlled by the Near-RT RIC via each of the RAN nodes. A communication device (UE: User Equipment) in the communication cell provided by each O-RU can be connected to each of the O-RUs, and can perform mobile communication with the core network (not shown) via each RAN node (O-CU/O-DU).

Each RAN node (O-CU/O-DU) and the Near-RT RIC provide operational data and the like of each RAN node, each O-RU and each UE through the O1 interface to the SMO for so-called FCAPS (Fault, Configuration, Accounting, Performance, Security). The SMO updates as necessary the operational policy for each RAN node issued by the Non-RT RIC to the Near-RT RIC through the A1 interface, based on the operational data acquired through the O1 interface. The O-RUs may be connected to the SMO for the FCAPS by the O1 interface and/or other interfaces (for example Open Fronthaul M-Plane).

The O-Cloud as a virtual infrastructure that virtually manages a set of the plurality of RAN nodes (O-CUs/O-DUs) is connected to the SMO by an O2 interface. The SMO generates a resource allocation policy concerning the resource allocation and/or a workload management policy concerning the workload management of the plurality of RAN nodes, based on the operational states of the plurality of RAN nodes (O-CUs/O-DUs) acquired from the O-Cloud through the O2 interface, and issues them to the O-Cloud through the O2 interface.

Figure 2 is a functional block diagram schematically showing the communication control apparatus 1 according to the present embodiment. The communication control apparatus 1 includes an energy saving information notification unit 11, an energy saving mode switching unit 12, a descrambling unit 13, an energy saving mode complying unit 14, a detailed information provision unit 15, and an energy saving mode applying unit 16. The functional blocks are realized by the cooperation of hardware resources, such as the central processing unit, memory, input devices, output devices, and peripheral devices connected to the computer, and software that is executed using them. Regardless of the type of computer or the installation location, each of the above functional blocks may be realized with the hardware resources of a single computer, or by combining hardware resources distributed across plurality of computers. Especially in the present embodiment, some or all of the functional blocks of the communication control apparatus 1 may be realized in a distributed or centralized manner by computer or processor provided in any portions of the O-RAN such as the SMO, the Non-RT RIC, the Near-RT RIC, the RAN node composed by the O-CU and/or the O-DU, the O-RU, or the O-Cloud, or may be realized in a distributed or centralized manner by computer or processor in a communication device (UE) and the like provided outside the O-RAN that can communicate with the O-RAN.

The communication control apparatus 1 need not have all the functional blocks illustrated in the figure to realize at least a portion of the operations and/or the effects described below. A person skilled in the art can configure a desired communication control apparatus by selecting the necessary illustrated or unillustrated functional blocks according to the operations and/or the effects desired to be realized with reference to the present disclosure. Besides, in the following, the inside of the communication control apparatus 1 will be divided into the network side and the communication device side for convenience. However, as long as at least a portion of the operations and/or the effects described below for each functional block are realized, some or all of each of the functional blocks may be implemented on a side different from the figure. Specifically, some or all of the energy saving information notification unit 11, the energy saving mode switching unit 12, the detailed information provision unit 15, and the energy saving mode applying unit 16, which are provided on the network side in the following, may be implemented on the communication device side, and some or all of the descrambling unit 13 and the energy saving mode complying unit 14, which are provided on the communication device side in the following, may be implemented on the network side.

The network side in the example shown in the figure consists of: a control unit "Controller" composed of the SMO, the Non-RT RIC, the Near-RT RIC and the like; L RAN nodes "RAN Nodes 1" to "RAN Node L" ((L is an arbitrary natural number) composed of the O-CU, the O-DU and the like; and M radio units "Radio Unit 1" to "Radio Unit M" (M is an arbitrary natural number) composed of the O-RU and the like, seen from the upper side near the core network (not shown). As mentioned above, the control unit and the RAN node are communicatively connected by the O1 interface or the E2 interface, and the RAN node and the radio unit are communicatively connected by the O1 interface, the Open Fronthaul M-Plane, the Open Fronthaul CUS-Plane and the like. The communication device side in the example shown in the figure consists of N communication device groups "UE Group 1" to "UE Group N" (N is an arbitrary natural number), which are formed by grouping a plurality of communication devices (UEs) as described below. The O-RU on the network side and the communication device side are communicatively connected by radio waves such as high-frequency waves.

The energy saving information notification unit 11 causes the O-RU to notify energy saving information concerning one or more energy saving modes that the O-RU can support. Specifically, the energy saving information notification unit 11 notifies the energy saving information from the O-RU to at least one of the SMO, the Non-RT RIC, the Near-RT RIC, the O-CU, and the O-DU, through the O1 interface and the Open Fronthaul M-Plane, the Open Fronthaul CUS-Plane and the like. The energy saving information notification unit 11 may be provided in the O-RU and actively notify the energy saving information to the SMO and the like outside the O-RU, or it may be provided outside the O-RU and cause the O-RU to passively the notify energy saving information to SMO and the like outside the O-RU.

Figure 3 shows a specific example of energy saving modes of O-RU included in the energy saving information notified by the energy saving information notification unit 11. Figure 3 illustrates five energy saving levels (sleep levels) or energy saving modes (SMs: Sleep Modes) SM1-SM5. The number of energy saving modes is arbitrary, as are the contents and the parameters of each energy saving mode described in detail below. In the example shown in the figure, the energy saving level increases stepwise from the first energy saving mode SM1, which has the lowest energy saving level, to the fifth energy saving mode SM5, which has the highest energy saving level. Each energy saving mode SM1-SM5 includes a first transition time (Deactivation Duration) to the respective energy saving mode, a second transition time (Activation Duration) from the respective energy saving mode, a minimum duration (Minimum Sleep Duration) of the respective energy saving mode, energy saving options (Power Saving Options) or reconfiguration options (Reconfiguration Options) in the respective energy saving mode, and the energy consumption (Power Consumption) of the O-RU in the respective energy saving mode.

The first transition time (Deactivation Duration) is the time required to transition each O-RU from normal mode or other energy saving mode to each energy saving mode. The second transition time (Activation Duration) is the time required to transition each O-RU from each energy saving mode to normal mode or other energy saving mode. minimum duration (Minimum Sleep Duration) is the minimum time during which each O-RU is maintained in each energy saving mode, for example, the minimum duration of the communication function of each O-RU reconfigured in accordance with each energy saving mode. For example, an O-RU switched to the first energy saving mode SM1 by the energy saving mode switching unit 12 transitions from the normal mode and the like to the first energy saving mode SM1 during the first transition time of "35.5µs". After transitioning to the energy saving mode SM1 and remaining in the first energy saving mode SM1 for the minimum duration of at least "71µs", the O-RU transitions or returns from the first energy saving mode SM1 to the normal mode and the like during the second transition time of "35.5µs".

In the second energy saving mode SM2, the first transition time and the second transition time are "0.5ms" and the minimum duration is "1ms". In the third energy saving mode SM3, the first transition time and the second transition time are "5ms" and the minimum duration is "10ms". In the fourth energy saving mode SM4, the first transition time and the second transition time are "0.5s" and the minimum duration is "1s". In the fifth energy saving mode SM5, the first transition time and the second transition time are any time longer than "0.5s" and the minimum duration is any time longer than "1s".

As described above, the first transition time and the second transition time in each energy saving mode are preferably equal to each other and the sum of them is preferably equal to the minimum duration. And, the minimum duration in each energy saving mode is preferably an integer multiple of a duration of at least one of the frame, subframe, slot, and symbol that the O-RU can communicate. Especially in the illustrated example, the minimum duration in some energy saving modes is the same as the duration of at least one of the frame, subframe, slot, and symbol. Specifically, the minimum duration of "10ms" in the third energy saving mode SM3 is the same as the duration of a frame in 5G and the like. Likewise, the minimum duration of "1ms" in the second energy saving mode SM2 is the same as the duration of a subframe in 5G and the like. Furthermore, the minimum duration of "71µs" in the first energy saving mode SM1 is the same as the duration of a symbol (where one subframe is composed of one slot including 14 OFDM symbols) in 5G and the like.

It should be noted that, in 5G, depending on the subcarrier spacing set in the network, there are 1 slot (where the subcarrier spacing is 15kHz), 2 slots (where the subcarrier spacing is 30kHz), 4 slots (where the subcarrier spacing is 60kHz), 8 slots (where the subcarrier spacing is 120kHz), and 16 slots (where the subcarrier spacing is 240kHz) included in one subframe. Therefore, depending on the subcarrier spacing, the slot durations would be "1ms" (15kHz subcarrier spacing), "0.5ms" (30kHz subcarrier spacing), "0.25ms" (60kHz subcarrier spacing), "0.125ms" (120kHz subcarrier spacing), and "0.0625ms" (240kHz subcarrier spacing). The slot durations or their integer multiples may be set as the minimum durations in the energy saving modes.

Besides, each slot includes 14 OFDM symbols, regardless of the subcarrier spacing. Therefore, depending on the subcarrier spacing, the symbol durations would be "71µs" (15kHz subcarrier spacing), "36µs" (30kHz subcarrier spacing), "18µs" (60kHz subcarrier spacing), "9µs" (120kHz subcarrier spacing), and "4µs" (240kHz subcarrier spacing). The symbol durations or their integer multiples may be set as the minimum durations in the energy saving modes.

Energy saving options (Power Saving Options) or reconfiguration options (Reconfiguration Options) are options of energy saving or reconfiguration of each O-RU in each energy saving mode. In the example shown in the figure, for the first energy saving mode SM1, four options are exemplarily shown: "Entirely off", "Partly off", "Hardware reconfiguration" (HW reconfiguration), and "Software reconfiguration" (SW reconfiguration). Although not shown in the figure, similar options can be set for other energy saving modes SM2-SM5. It should be noted that the energy saving options and/or the reconfiguration options of each O-RU may specify whether or not the time-domain energy saving control, the frequency-domain energy saving control, and the space-domain energy saving control described below can be supported, or what can be supported for those energy saving controls.

The energy saving option of "Entirely off" reduces the energy consumption of the O-RU by cutting off power to all components and/or all communication functions of the O-RU for energy saving. The energy saving option of "Partly off" reduces the energy consumption of the O-RU by cutting off power to a portion of components and/or a portion of communication functions of the O-RU for energy saving. Thus, the presence or absence of the "Entirely off" and "Partly off" energy saving options indicates whether or not the communication functions of the O-RU can be deactivated during the energy saving mode.

Here, all or some of the components whose power is cut off or reduced during the "Entirely off" mode or the "Partly off" mode, may contribute to energy saving in the O-RU when switched to the off state. Examples of such components include, but are not limited to, hardware components in the O-RU, software components in the O-RU, specific frequency band and/or specific carrier (carrier wave) available for the O-RU.

If specific frequency band and/or specific carrier are switched to the off state by the Non-RT RIC and the like, the use of such "off frequency band" and/or "off carrier" by the O-RU is prohibited or restricted (or induced to be used as little as possible). In this case, the hardware components and/or the software components in the O-RU are basically kept on (in other words, the M-Plane, the S-Plane, and the C/U-Plane are all kept active), in order to continue communication processing related to "on-frequency band" and/or "on-carrier" other than "off-frequency band" and/or "off-carrier". However, as the frequency band and/or carrier for communication processing are reduced, the communication amount or the communication speed decreases (or hardware components and/or software components dedicated to "off-frequency band" and/or "off-carrier" are switched to the off state), thereby energy consumption of the O-RU will be reduced.

On the other hand, if hardware components and/or software components in the O-RU are switched to the off state by the Non-RT RIC and/or the O-DU and the like, during the "Entirely off" mode or "Partly off" mode, the power supply to such components is substantially cut off. However, even in such a case, it is preferable to provide a minimum amount of power to keep the management plane (M-Plane) function of such components in the on state (active state). By keeping the M-Plane active, when a component in the off state is switched back on, the management information maintained by the M-Plane allows the synchronization plane (S-Plane) function and control/user plane (C/U-Plane) function to be quickly reactivated and such component can be quickly returned to a communication-ready state.

It should be noted that, if hardware components and/or software components in the O-RU are switched to the off state, the S-Plane function may be maintained in the active state in addition to the M-Plane function of such components. By keeping the S-Plane active, synchronization information concerning clock and the like between O-RUs and/or between O-RU and O-DU is maintained, thus eliminating the need for synchronization establishment processing after such components are switched back to the on state. As such, although additional power is required to additionally maintain the S-Plane in the active state, components that are switched from the off state to the on state again can be restored to a communication-ready state even more quickly.

As described above, switching hardware components and/or software components to the off state can significantly reduce the energy consumption of the O-RU. On the other hand, additional processing or time are required to switch such components back to the on state again. In contrast, the option of switching specific frequency band and/or specific carrier to the off state keeps hardware components and/or software components in the on state, which reduces the amount of power saved of the O-RU but allows the O-RU to seamlessly remain in the communication-ready state. In light of such trade-off, for example, when transitioning from normal mode to energy saving mode (for the first time), the option to switch specific frequency band and/or specific carrier to the off state may be taken to maintain the O-RU in the communication-ready state. Then, if further energy saving is required or if there is little problem to remove the O-RU from the communication-ready state once, the option to switch hardware components and/or software components to the off state may be taken to maximize the amount of energy saving of the O-RU. By adopting such step-by-step approach, the energy saving modes can be implemented in an appropriate manner depending on the situation.

The energy saving option of "Hardware reconfiguration" (HW reconfiguration) reduces the energy consumption of the O-RU by reconfiguring the hardware of the O-RU for energy saving. For example, if an O-RU is equipped with an integrated circuit that includes reconfigurable hardware such as a field-programmable gate array (FPGA) or a reconfigurable processor, it can be switched to a hardware configuration with lower processing performance, but less energy consumption than the normal mode and the like, in order to reduce energy consumption of the O-RU. The energy saving option of "Software reconfiguration" (SW reconfiguration) reduces the energy consumption of the O-RU by reconfiguring the software executed by the O-RU for energy saving. For example, the energy consumption of the O-RU can be reduced by rewriting the software to one that can execute the similar processes as in the normal mode and the like, but with less energy consumption while reducing the processing speed and the like.

As described above, if multiple energy saving options are included in one energy saving mode, the aforementioned first transition time, second transition time, minimum duration time, and energy consumption described below may be set for each energy saving option. Alternatively, an energy saving mode may be provided for each energy saving option.

Energy consumption (Power Consumption) is the amount of energy consumed by the O-RU during each energy saving mode. In the example shown in the figure, for the first energy saving mode SM1, "Energy consumption of the entire O-RU" (Total: XXX Watts), "Energy consumption of Component A" (Component A: xxx Watts), "Energy consumption of Component B" (Component B: yyy Watts), and "Energy consumption of Component C" (Component C: zzz Watts) are exemplarily shown. The "Energy consumption of the entire O-RU" is equal to the sum of the "Energy consumption of Component A", "Energy consumption of Component B", and "Energy consumption of Component C". Although not shown in the figure, similar energy consumptions are input for other energy saving modes SM2-SM5.

The energy consumptions of the entire O-RU for energy saving or each component and/or each communication function of the O-RU are, for example, statistical data based on simulations or past measurements during actual operations. It should be noted that, in addition to or instead of the energy consumption of the O-RU during the energy saving mode as in this example, the statistical data of the energy consumption during the transition of the O-RU from another mode to such energy saving mode (the first transition time) and/or during the transition of the O-RU from such energy saving mode to another mode (the second transition time: strictly speaking, during the period between when the O-RU receives a restart command from the O-DU and the like and when it establishes a communication-ready carrier) may be included in the energy saving information notified by the energy saving information notification unit 11. Besides, the energy consumption of the O-RU in normal mode, which is not an energy saving mode, may be included in the energy saving information notified by the energy saving information notification unit 11 for comparison with the energy consumption of the O-RU in the energy saving mode.

It should be noted that, if an O-RU is switched to a certain energy saving mode by the energy saving mode switching unit 12, the energy consumptions of the entire O-RU, each component, and each communication function, may be measured in real-time by the O-RU or other portions of the communication control apparatus 1. The real-time measurement data of energy consumption are shared with the communication control apparatus 1 via the energy saving information notification unit 11 and the like, and are compared with the statistical data of energy consumption during the corresponding energy saving mode in Figure 3. If there is a significant discrepancy between the real-time measurement data and the statistical data, the energy saving mode switching unit 12 may cancel the energy saving mode, since the statistical data may not be reliable that was considered when selecting the energy saving mode.

The various O-RU energy saving information as described above is typically notified to the control unit in the communication control apparatus 1 such as the SMO through the O1 interface, the Open Fronthaul M-Plane, the Open Fronthaul CUS-Plane and the like as described above. However, the energy saving information of the O-RU may be notified to the control unit of the communication control apparatus 1 through other interfaces. For example, the RAN node (O-CU/O-DU) controlling the O-RU may function as the energy saving information notification unit 11 and notify the SMO of the energy saving information of the O-RU to be controlled through the O1 interface, or notify the Near-RT RIC through the E2 interface. Furthermore, the Near-RT RIC may function as the energy saving information notification unit 11 and notify the SMO through the O1 interface of the energy saving information of the O-RU received through the E2 interface, or notify the Non-RT RIC through the A1 interface. Besides, the O-Cloud, which virtually manages RAN node (O-CU/O-DU), may function as the energy saving information notification unit 11 and notify the SMO through the O2 interface of the energy saving information of the O-RU acquired by the RAN node to be controlled. In case where the O-Cloud functions as the energy saving information notification unit 11, it is preferable to notify the SMO of the energy saving information of the O-RU through the O2dms interface in Figure 2.

The energy saving mode switching unit 12 switches the O-RU to the energy saving mode notified by the energy saving information notification unit 11 that the O-RU can support, and/or to the energy saving mode that the SMO, the Non-RT RIC, the Near-RT RIC, the O-CU, the O-DU, the O-Cloud and the like, where the main portion of the energy saving mode switching unit 12 is provided, recognize beforehand that the O-RU can support. The energy saving mode switching unit 12 includes an energy saving ID setting unit 121, an energy saving mode designation unit 122, a scrambling unit 123, and an energy saving information sharing unit 124.

The energy saving ID setting unit 121 sets a common energy saving ID for a plurality of communication devices (UEs) to which a common energy saving mode should be applied. The energy saving ID is configured as a RNTI (Radio Network Temporary Identifier) temporarily assigned to the plurality of communication devices. The RNTI is currently used in existing wireless communication standards such as 5G. In the present embodiment, while utilizing the existing RNTI framework, a new RNTI "NES-RNTI" that can be utilized for controlling energy saving of the network (hereinafter also referred to as NES (Network Energy Saving)) is created to achieve effective NES control through grouping of communication devices. As described below, information concerning specific energy saving modes to be applied to each communication device group is set through the Downlink Control Information (DCI) or the Radio Resource Control (RRC) signal currently used in existing wireless communication standards such as 5G, and is shared with each communication device group. Thus, the NES control according to the present embodiment can be smoothly realized while maintaining the existing framework of the RNTI, the DCI, the RRC and the like.

Figure 4 shows examples of the NES-RNTI and the DCI utilized for the NES control according to the present embodiment. The energy saving ID setting unit 121 sets N NES-RNTIs to form N communication device groups in the example of Figure 2. Here, the N NES-RNTIs may have different values from each other or the same value. Regardless of the value of the NES-RNTI, the communication device that should constitute a communication device group is indirectly designated through the masking process and the like in the DCI scrambling described below.

The energy saving mode designation unit 122 designates a common energy saving mode that should be applied to each communication device group. The energy saving mode designation unit 122 is provided on the network side that can communicate with a communication device, and designates the common energy saving mode after recognizing the common energy saving mode that can be commonly supported by the plurality of communication devices belonging to the same communication device group. The energy saving modes that can be supported by each communication device are shared by any communication means between each of the communication device and the network side. This information may be notified to the network side in substantially real time from each communication device, or it may have been notified or shared from each communication device in the past and have been stored or registered in the network side (typically, the core network).

In the example in Figure 4, seven candidate energy saving modes applicable to each communication device group are shown. The energy saving mode designation unit 122 selects one or more energy saving modes that should be applied to each communication device group "UE Group 1" to "UE Group N" from the options "1" to "7" shown in the figure. The designation information or selection information of the energy saving modes by the energy saving mode designation unit 122 is set in the DCI in the form of the DCI format and other energy saving mode specification information corresponding to each energy saving mode. It should be noted that the DCI formats "DCI2_7" and "DCI4_2" shown in the figure are given for illustrative purpose and do not exist in existing wireless communication standards. On the contrary, it is preferable to newly create and assign a unique DCI format for at least some of the energy saving modes in implementing the NES control according to the present embodiment.

Before describing the subsequent processes of the energy saving mode switching unit 12, the seven energy saving modes in the example of Figure 4 will be described. It should be noted that the energy saving modes available in the present embodiment are not limited to those shown in Figure 4, but may be those shown in Figure 3, or any combination of Figures 3 and 4, or include elements that are not shown in Figures 3 or 4 but are available or conceivable to those skilled in the art. The energy saving modes shown in Figure 4 include those involving energy saving control in the time domain concerning a communication device group, those involving energy saving control in the frequency domain concerning a communication device group, and those involving energy saving control in the space domain concerning a communication device group.

The energy saving mode "1" in Figure 4 relates to energy saving control in the frequency domain. Specifically, the energy saving mode "1" involves at least one of simultaneous switching of PCells (Primary Cells) based on communication device group, and simultaneous activation/simultaneous shutoff (deactivation) of SCells (Secondary Cells) based on communication device group, in carrier aggregation. For example, if it becomes necessary to save energy of a PCell to which a communication device group is currently connected, the communication device group is simultaneously switched to another PCell. Besides, if it becomes necessary to save energy of a SCell to which a communication device group is currently connected, the SCell is stopped or deactivated simultaneously for the communication device group. Furthermore, if it becomes unnecessary to save energy of a SCell being deactivated for a communication device group, the SCell is activated simultaneously for the communication device group.

In order for a communication device group to comply with the energy saving mode "1", it needs to acquire the detailed information as exemplified in the "Possible Information Elements" column. Specifically, S-Cell status indicated in bitmap, Pcell switching indication with cell ID, and candidate cell ID are exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "2" in Figure 4 relates to energy saving control in the time domain. Specifically, the energy saving mode "2" aligns the timings of discontinuous receptions based on communication device group. The discontinuous reception is also referred to as the DRX (Discontinuous Reception) in existing wireless communication standards such as 4G and 5G, and there are also advanced technologies such as the cDRX (connected mode DRX) and the eDRX (extended DRX). In these DRXs, an idle communication device periodically transitions to a sleep state for a short period of time, thereby contributing to energy saving of the communication device and the network. In the present embodiment, the timings of discontinuous receptions are aligned based on communication device group, so that the communication device group (consisting of a plurality of communication devices) transitions to the sleep states simultaneously. During this period, a base station on the network side (e.g., O-RU/O-DU/O-CU) can also suspend communication with the entire communication device group, which effectively saves energy.

In order for a communication device group to comply with the energy saving mode "2", it needs to acquire the detailed information as exemplified in the "Possible Information Elements" column. Specifically, cDRX indication and cDRX configuration common to a communication device group are exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "3" in Figure 4 relates to energy saving control in the frequency domain. Specifically, the energy saving mode "3" assigns a common BWP (Bandwidth Part) based on communication device group. For example, if each communication device in a communication device group is using a different BWP, by switching their respective connections to the common BWP, the communication can be concentrated on the common BWP to improve utilization efficiency, and at the same time, energy consumption related to the now unused BWP can be significantly reduced. Besides, if it becomes necessary to save energy of the common BWP to which the communication device group is currently connected, the communication device group may be switched to another common BWP simultaneously. Furthermore, energy saving efficiency may be enhanced by aligning (commonizing), based on communication device group, the frequency band or the power spectrum density used in actual communication with the communication device group via a common BWP.

In order for a communication device group to comply with the energy saving mode "3", it needs to acquire the detailed information as exemplified in the "Possible Information Elements" column. Specifically, BWP switching indication, BWP candidate (bitmask for selection), and PDSCH (Physical Downlink Shared Channel) transmission power/EPRE (Energy Per Resource Element) are exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "4" in Figure 4 relates to energy saving control in the space domain. Specifically, the energy saving mode "4" realizes the L1 signaling common to a communication device group for the space-domain energy saving control. In the space-domain energy saving control, it is preferable that the energy saving ID setting unit 121 groups a plurality of communication devices located within the same directional range from a base station (e.g., O-RU) by setting a common energy saving ID, and the energy saving mode designation unit 122 designates a common energy saving mode (e.g., this energy saving mode "4") that should be applied to the communication device group. It should be noted that, in order for the network side (the energy saving ID setting unit 121) to appropriately group each communication device located within the same directional range from a base station, it is preferable that the information indicating the relative position of each communication device and the base station be shared from each of the communication devices to the network side. Examples of such information include the CSI (Channel State Information) measured by each communication device and scheduling request from each communication device.

By utilizing the L1 signaling common to a communication device group located within the same directional range from a base station as described above, the space-domain energy saving control by the base station can be appropriately performed to the communication device group. For example, if the communication volume in a communication device group within a certain directional range from a base station is small, the base station can effectively reduce energy consumption by reducing the communication resources (antenna, transmission circuit, transmission power, frequency band, communication channel, and communication time, and the like) allocated and used within the directional range.

Besides, if a base station can transmit a plurality of beams within a plurality of directional ranges around it, energy consumption can be reduced by stopping the beam in at least one direction. For example, if the communication volume in a communication device group within a certain directional range from a base station is small, the base station can effectively reduce energy consumption by stopping at least one of the one or more beams allocated within the directional range. Besides, a base station can effectively reduce energy consumption by stopping the beam allocated within the directional range where none of the communication device groups are located.

It should be noted that a communication device in or after "Release 18" of 3GPP can recognize and access the base station even if the base station or its beam is substantially deactivated. Therefore, even if a communication device group is located within a certain directional range from a base station, and the group includes only communication devices in or after "Release 18" (note that all of them shall be in the idle states) that can access an inactive base station, there is no major problem if the beam allocated within the directional range is stopped. On the other hand, in case where a communication device group includes communication devices before "Release 18" which are idle, if the beam allocated within the directional range is stopped, the "old" communication devices in the idle states would lose the base station, thereby rather increasing the communication workloads for reconnection and the like. Therefore, if a communication device group includes a communication device before "Release 18", it is preferable not to stop all beams allocated within the directional range (to maintain at least one beam).

In order for a communication device group to comply with the energy saving mode "4", it needs to acquire the detailed information as exemplified in the "Possible Information Elements" column. Specifically, "SS-PBCH-BlockPower (Bitmap)" ("SS" means "Synchronization Signal" and "PBCH" means "Physical Broadcast Channel") and "powerControlOffsetSS (Bitmap )" are exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "5" in Figure 4 relates to the common configuration of the space-domain energy saving control, the frequency-domain energy saving control and/or the power-domain energy saving control (e.g., the energy saving mode "6" described below) based on communication device group.

In order for a communication device group to comply with the energy saving mode "5", it needs to acquire the detailed information as exemplified in the "Possible Information Elements" column. Specifically, cell sleep pattern or cell sleep state indication in bitmask, relative spatial-domain information such as beam ID, and frequency-domain information such as BWP or adaptive frequency bandwidth are exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "6" in Figure 4 relates to energy saving control in the power domain. Specifically, the energy saving mode "6" allows specification of an upper limit of the total transmission power from a base station (O-RU and the like) based on communication device group. Since communication with the communication device group is realized within the range of the total transmission power allowed for the communication device group, a situation in which energy consumption in the base station becomes excessive can be prevented.

In order for a communication device group to comply with the energy saving mode "6", it needs to acquire the detailed information as exemplified in the "Possible Information Elements" column. Specifically, PDSCH transmission power/EPRE is exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

The energy saving mode "7" in Figure 4 relates to energy saving control in the space domain. Specifically, the energy saving mode "7" stops at least one TRP (Transmission and Reception Point) among a plurality of TRPs that can be configured by a base station (e.g., O-RU) utilizing technologies such as MIMO (Multiple-Input and Multiple-Output), for a communication device group located within the same directional range from the base station. For example, if the communication volume in a communication device group within a certain directional range from a base station is small, the base station can effectively reduce energy consumption by stopping or deactivating at least one of the one or more TRPs allocated within the directional range. Besides, a base station can effectively reduce energy consumption by stopping or deactivating the TRP allocated within the directional range where none of the communication device groups are located.

In order for a communication device group to comply with the energy saving mode "7", it needs to acquire the detailed information as exemplified in the "Possible Information Elements" column. Specifically, selection of "s-TRP" or "m-TRP" is exemplified. This detailed information may be included, as described below, in the DCI itself which instructs the execution of the energy saving mode, or in the RRC signal that each communication device receives when establishing an initial connection with a base station (e.g., O-RU/O-DU/O-CU).

Now back to the description of the energy saving mode switching unit 12 in Figure 2. The scrambling unit 123 applies scrambling based on the energy saving ID set by the energy saving ID setting unit 121 to the control information including the energy saving mode designation information by the energy saving mode designation unit 122. In the present embodiment, the DCI transmitted (broadcasted) to communication devices by PDCCH (Physical Downlink Control Channel), which is a downlink channel from a base station, is used as the control information. Besides, as mentioned above, in the present embodiment, the NES-RNTI based on the existing RNTI framework is used (newly created) as the energy saving ID. The scrambling of the DCI based on the RNTI has been established in existing wireless communication standards such as 4G and 5G, and as briefly explained below, the process (scrambling) can also be utilized for the scrambling of the DCI based on the NES-RNTI according to the present embodiment.

The DCI in the present embodiment is configured according to Figure 4. Specifically, the DCI in the present embodiment is configured according to the DCI format corresponding to the energy saving mode designated by the energy saving mode designation unit 122, and includes in the payload as necessary the energy saving mode designation information by the energy saving mode designation unit 122 (for example, number of energy saving mode "No." and detailed information "Possible Information Elements") (note that the DCI format itself can be interpreted as the energy saving mode designation information). The CRC (Cyclic Redundancy Check) bits are added to the payload. The CRC bits are further scrambled by the NES-RNTI. The scrambled CRC bits are configured using various known methods so that they can be descrambled (decoded) only by the communication devices belonging to the communication device group for which the NES-RNTI should be set. For example, during the scrambling of the CRC bits, an additional masking (CRC Scrambling Mask) may be applied for the communication device group for which the NES-RNTI should be set.

The energy saving information sharing unit 124 shares at least one of the energy saving ID (NES-RNTI) and the energy saving mode designation information with a plurality of communication devices belonging to the communication device group for which the NES-RNTI should be set, by having them descramble the control information (specifically, the scrambled CRC bits in the DCI). Specifically, the energy saving information sharing unit 124, which is configured by the O-RU and the like on the network side, transmits (broadcasts) the DCI after the scrambling by the scrambling unit 123 is applied to communication devices through the PDCCH.

The descrambling unit 13 provided in each communication device that has received the DCI after the scrambling from the energy saving information sharing unit 124, accesses the DCI in the search space accessible by each communication device and attempts to descramble (decode) the scrambled CRC bits. Since, as mentioned above, the CRC bits are configured so that they can be descrambled only by the communication devices belonging to the communication device group for which the NES-RNTI should be set, these communication devices will successfully descramble the CRC bits and can recognize the energy saving ID (NES-RNTI) and/or the energy saving mode designation information as addressed to themselves. On the other hand, since the communication devices not belonging to the communication device group for which the NES-RNTI should be set, will fail to descramble the CRC bits, the energy saving mode by the NES-RNTI and the DCI will not be applied to them.

Each communication device of the communication device group that has succeeded in descrambling the CRC bits, by the energy saving mode complying unit 14, complies with the energy saving mode executed by the network side (the energy saving mode applying unit 16 described below) for each communication device. Specifically, the energy saving mode complying unit 14 adapts the configuration or operation of each communication device to the energy saving mode executed by the network side, based on the detailed information "Possible Information Elements" of each energy saving mode in Figure 4, which can be included in the DCI received by each communication device from the energy saving information sharing unit 124 on the network side.

It should be noted that there may be a case where the amount of the detailed information to support the energy saving mode on the communication device side may be large. In such a case, it is undesirable to consume a large amount of limited communication resources in the physical layer, such as the DCI and/or the PDCCH, just for the detailed information of the energy saving mode. Therefore, the communication control apparatus 1, by the detailed information provision unit 15 provided on the network side, may provide the detailed information of the energy saving mode in advance from a base station to communication devices, through other signals such as the RRC (Radio Resource Control) signal. The RRC signal including the detailed information of the energy saving mode is provided from the base station to each of the communication devices when each communication device establishes an initial connection with the base station. Each communication device retains the detailed information of the energy saving mode included in the RRC signal in a storage and the like accessible by itself. Then, each communication device that has successfully decoded the DCI by the descrambling unit 13 utilizes the detailed information of the energy saving mode (the detailed information provided in advance by the detailed information provision unit 15) read from the storage and the like, to comply with the energy saving mode by the energy saving mode complying unit 14.

It should be noted that any other signals or channels, not limited to the PDCCH and the RRC signal, such as the MAC CE (MAC Control Element(s)) signal, may be utilized for sharing the detailed information of the energy saving mode to communication devices. Besides, instead of or in addition to the PDCCH and the DCI, the MAC CE signal or MAC CE command configured for a particular communication device group may be utilized to designate an energy saving ID or an energy saving mode by the energy saving mode switching unit 12.

The energy saving mode applying unit 16 on the network side executes the energy saving mode designated by the energy saving mode designation unit 122 for the communication device group for which the common energy saving ID (NES-RNTI) is set by the energy saving ID setting unit 121. On the communication device side, each communication device belonging to the communication device group complies with the energy saving mode by the energy saving mode complying unit 14. Thus, according to the present embodiment, the network side and the communication device side can cooperate appropriately concerning the energy saving mode based on communication device group.

The present disclosure has been described above based on embodiments. It is obvious to those skilled in the art that various variations are possible in the combination of each component and/or each process in the exemplary embodiments, and that such variations are also encompassed within the scope of the present disclosure.

In the foregoing embodiment, a communication device group is formed based on the energy saving ID (such as NES-RNTI) set by the energy saving ID setting unit 121, but methods of grouping communication devices are not limited to this. The energy saving mode designation unit 122 typically on the network side, substantially responsible for grouping communication devices, can form a desired communication device group utilizing any communication means with each communication device to be grouped. For example, the energy saving mode designation unit 122 on the network side can form a desired communication device group, by combining as necessary the broadcast information such as SIB (System Information Block) that is periodically or non-periodically transmitted or broadcasted to communication devices in a communication cell, and the RRC signal and the like that is transmitted to each communication device, while sharing necessary information for the grouping with each communication device.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.
1. A communication control apparatus comprising at least one processor that performs:
   by an energy saving mode designation unit, designating a common energy saving mode to be applied to a plurality of communication devices.
2. The communication control apparatus according to item 1, wherein
   the at least one processor performs:
   by an energy saving ID setting unit, setting a common energy saving ID for the plurality of communication devices; and
   by an energy saving information sharing unit, sharing at least one of the energy saving ID and the energy saving mode designation information with the plurality of communication devices.
3. The communication control apparatus according to item 2, wherein
   the at least one processor performs, by a scrambling unit, applying scrambling based on the energy saving ID to the control information including the energy saving mode designation information, and wherein
   the energy saving information sharing unit shares at least one of the energy saving ID and the energy saving mode designation information, by having the plurality of communication devices descramble the control information.
4. The communication control apparatus according to item 2 or 3, wherein the energy saving ID is configured as a RNTI (Radio Network Temporary Identifier) temporarily assigned to the plurality of communication devices.
5. The communication control apparatus according to item 3, wherein
   the control information is a DCI (Downlink Control Information) transmitted from a base station to the plurality of communication devices, and
   the energy saving mode designation unit designates the common energy saving mode to be applied to the plurality of communication devices based on the DCI format corresponding to the energy saving mode.
6. The communication control apparatus according to any of items 2 to 5, wherein the common energy saving mode involves time-domain energy saving control for the plurality of communication devices.
7. The communication control apparatus according to item 6, wherein the time-domain energy saving control includes aligning the timings of discontinuous receptions of the plurality of communication devices.
8. The communication control apparatus according to any of items 2 to 7, wherein the common energy saving mode involves frequency-domain energy saving control for the plurality of communication devices.
9. The communication control apparatus according to item 8, wherein the frequency-domain energy saving control includes assigning a common BWP (Bandwidth Part) to the plurality of communication devices.
10. The communication control apparatus according to item 8 or 9, wherein the frequency-domain energy saving control includes at least one of simultaneous switching of PCells (Primary Cells) of the plurality of communication devices, and simultaneous shutoff of SCells (Secondary Cells) of the plurality of communication devices, in carrier aggregation.
11. The communication control apparatus according to any of items 2 to 10, wherein the common energy saving mode involves space-domain energy saving control for the plurality of communication devices.
12. The communication control apparatus according to item 11, wherein the space-domain energy saving control includes stopping at least one of the plurality of beams that can be transmitted by a base station in at least one direction.
13. The communication control apparatus according to item 12, wherein if the plurality of communication devices include only communication devices that can access the inactive base station, the beam toward the plurality of communication devices is stopped in the space-domain energy saving control.
14. The communication control apparatus according to any of items 11 to 13, wherein the space-domain energy saving control includes stopping at least one TRP (Transmission and Reception Point) among a plurality of TRPs that can be configured by a base station.
15. The communication control apparatus according to any of items 11 to 14, wherein
   the energy saving ID setting unit sets the common energy saving ID for the plurality of communication devices located within the same directional range from a base station, and the energy saving mode designation unit designates the common energy saving mode involving the space-domain energy saving control to be applied to the plurality of communication devices.
16. The communication control apparatus according to any of items 2 to 15, wherein the common energy saving mode involves power-domain energy saving control for the plurality of communication devices.
17. The communication control apparatus according to item 16, wherein the power-domain energy saving control includes specifying an upper limit of the total transmission power from a base station to the plurality of communication devices.
18. The communication control apparatus according to item 3 or 5, wherein
   the at least one processor performs, by a detailed information provision unit, providing detailed information of the energy saving mode from a base station to the plurality of communication devices in advance through the RRC (Radio Resource Control) signal, and wherein
   the plurality of communication devices, which have acquired the energy saving mode designation information by descrambling the control information, acquire the detailed information of the energy saving mode from the detailed information provision unit.
19. The communication control apparatus according to any of items 1 to 18, wherein the energy saving mode designation unit is provided on the network side that can communicate with a communication device, and designates the common energy saving mode after recognizing the common energy saving mode that can be commonly supported by the plurality of communication devices.
20. A communication control method comprising:
   setting a common energy saving ID for a plurality of communication devices to which a common energy saving mode should be applied;
   designating the common energy saving mode to be applied to the plurality of communication devices; and
   sharing at least one of the energy saving ID and the energy saving mode designation information with the plurality of communication devices.
21. A computer-readable medium storing a communication control program causing a computer to perform:
   setting a common energy saving ID for a plurality of communication devices to which a common energy saving mode should be applied;
   designating the common energy saving mode to be applied to the plurality of communication devices; and sharing at least one of the energy saving ID and the energy saving mode designation information with the plurality of communication devices.

The application claims priority of Japanese patent application 2022-128396, filed on August 10, 2022, which is hereby incorporated by reference in its entirety.

The present disclosure relates to grouping of a plurality of communication devices for energy saving mode.

1 communication control apparatus, 11 energy saving information notification unit, 12 energy saving mode switching unit, 13 descrambling unit, 14 energy saving mode complying unit, 15 detailed information provision unit, 16 energy saving mode applying unit, 121 energy saving ID setting unit, 122 energy saving mode designation unit, 123 scrambling unit, 124 energy saving information sharing unit.

## Claims

1. A communication control apparatus comprising at least one processor that performs:
by an energy saving mode designation unit, designating a common energy saving mode to be applied to a plurality of communication devices.

2. The communication control apparatus according to claim 1, wherein
the at least one processor performs:
by an energy saving ID setting unit, setting a common energy saving ID for the plurality of communication devices; and
by an energy saving information sharing unit, sharing at least one of the energy saving ID and the energy saving mode designation information with the plurality of communication devices.

3. The communication control apparatus according to claim 2, wherein
the at least one processor performs, by a scrambling unit, applying scrambling based on the energy saving ID to the control information including the energy saving mode designation information, and wherein
the energy saving information sharing unit shares at least one of the energy saving ID and the energy saving mode designation information, by having the plurality of communication devices descramble the control information.

4. The communication control apparatus according to claim 2, wherein the energy saving ID is configured as a RNTI (Radio Network Temporary Identifier) temporarily assigned to the plurality of communication devices.

5. The communication control apparatus according to claim 3, wherein
the control information is a DCI (Downlink Control Information) transmitted from a base station to the plurality of communication devices, and
the energy saving mode designation unit designates the common energy saving mode to be applied to the plurality of communication devices based on the DCI format corresponding to the energy saving mode.

6. The communication control apparatus according to claim 2, wherein the common energy saving mode involves time-domain energy saving control for the plurality of communication devices.

7. The communication control apparatus according to claim 6, wherein the time-domain energy saving control includes aligning the timings of discontinuous receptions of the plurality of communication devices.

8. The communication control apparatus according to claim 2, wherein the common energy saving mode involves frequency-domain energy saving control for the plurality of communication devices.

9. The communication control apparatus according to claim 8, wherein the frequency-domain energy saving control includes assigning a common BWP (Bandwidth Part) to the plurality of communication devices.

10. The communication control apparatus according to claim 8, wherein the frequency-domain energy saving control includes at least one of simultaneous switching of PCells (Primary Cells) of the plurality of communication devices, and simultaneous shutoff of SCells (Secondary Cells) of the plurality of communication devices, in carrier aggregation.

11. The communication control apparatus according to claim 2, wherein the common energy saving mode involves space-domain energy saving control for the plurality of communication devices.

12. The communication control apparatus according to claim 11, wherein the space-domain energy saving control includes stopping at least one of the plurality of beams that can be transmitted by a base station in at least one direction.

13. The communication control apparatus according to claim 12, wherein if the plurality of communication devices include only communication devices that can access the inactive base station, the beam toward the plurality of communication devices is stopped in the space-domain energy saving control.

14. The communication control apparatus according to claim 11, wherein the space-domain energy saving control includes stopping at least one TRP (Transmission and Reception Point) among a plurality of TRPs that can be configured by a base station.

15. The communication control apparatus according to claim 11, wherein
the energy saving ID setting unit sets the common energy saving ID for the plurality of communication devices located within the same directional range from a base station, and
the energy saving mode designation unit designates the common energy saving mode involving the space-domain energy saving control to be applied to the plurality of communication devices.

16. The communication control apparatus according to claim 2, wherein the common energy saving mode involves power-domain energy saving control for the plurality of communication devices.

17. The communication control apparatus according to claim 16, wherein the power-domain energy saving control includes specifying an upper limit of the total transmission power from a base station to the plurality of communication devices.

18. The communication control apparatus according to claim 3, wherein
the at least one processor performs, by a detailed information provision unit, providing detailed information of the energy saving mode from a base station to the plurality of communication devices in advance through the RRC (Radio Resource Control) signal, and wherein
the plurality of communication devices, which have acquired the energy saving mode designation information by descrambling the control information, acquire the detailed information of the energy saving mode from the detailed information provision unit.

19. The communication control apparatus according to claim 1, wherein the energy saving mode designation unit is provided on the network side that can communicate with a communication device, and designates the common energy saving mode after recognizing the common energy saving mode that can be commonly supported by the plurality of communication devices.

20. A communication control method comprising:
setting a common energy saving ID for a plurality of communication devices to which a common energy saving mode should be applied;
designating the common energy saving mode to be applied to the plurality of communication devices; and
sharing at least one of the energy saving ID and the energy saving mode designation information with the plurality of communication devices.

21. A computer-readable medium storing a communication control program causing a computer to perform:
setting a common energy saving ID for a plurality of communication devices to which a common energy saving mode should be applied;
designating the common energy saving mode to be applied to the plurality of communication devices; and
sharing at least one of the energy saving ID and the energy saving mode designation information with the plurality of communication devices.
